## Europäisches Patentamt

## European Patent Office

## Office européen des brevets

(19)

(11) Veröffentlichungsnummer: **0 244 746**
**B1**

(12) # EUROPÄISCHE PATENTSCHRIFT

(45) Veröffentlichungstag der Patentschrift:
**16.08.89**

(21) Anmeldenummer: **87106207.1**

(22) Anmeldetag: **29.04.87**

(51) Int. Cl.⁴: **C03B 23/18**, C03B 27/00,
C03B 33/06

(54) Glasgefäss, insbesondere Ampulle, und Verfahren zur Behandlung dieses Glasgefässes.

(30) Priorität: **06.05.86 DE 3615287**

(43) Veröffentlichungstag der Anmeldung:
**11.11.87 Patentblatt 87/46**

(45) Bekanntmachung des Hinweises auf die Patenterteilung:
**16.08.89 Patentblatt 89/33**

(84) Benannte Vertragsstaaten:
**AT BE CH ES FR GB GR IT LI NL**

(56) Entgegenhaltungen:
**AT-B- 114 146**
**DE-B- 1 910 942**
**DE-C- 683 259**

(73) Patentinhaber: **SCHOTT RUHRGLAS GMBH,**
**Postfach 1180, D-8596 Mitterteich(DE)**

(72) Erfinder: **Männl, Reinhard, Kohllohstrasse 41,**
**D-8596 Mitterteich(DE)**

(74) Vertreter: **Dr. Fuchs, Dr. Luderschmidt Dipl.-Phys. Seids,**
**Dr. Mehler Patentanwälte, Sonnenberger Strasse 100,**
**D-6200 Wiesbaden(DE)**

ACTORUM AG

**Beschreibung**

Die Erfindung betrifft ein Glasgefäß, insbesondere eine Ampulle, die an einer bestimmten Stelle ihrer Wandung zum Öffnen des Gefäßes vorbereitet ist. Die Erfindung betrifft zugleich ein Verfahren zur Behandlung eines solchen Gefäßes, um es für das spätere Öffnen vorzubereiten.

Ampullen, Phiolen und ähnliche Glasgefäße werden verschlossen, indem man das offene Ende, durch welches das Gefäß gefüllt worden ist, nach dem Befüllen in einer Flamme versiegelt. Auf diese Weise wird der Inhalt des Gefäßes bis zu seiner Verwendung gegen Verunreinigung, Verdampfung oder Sublimation geschützt.

Die Aufgabe, derartige hermetisch verschlossene Glasgefäße auf möglichst bequeme Weise wieder zu öffnen, besteht naturgemäß schon so lange, wie derartige Gefäße verwendet werden. Die gebräuchlichste Methode zum Öffnen von z. B. Ampullen besteht darin, den Hals der Ampulle abzubrechen, nachdem man zuvor an der gewünschten Stelle mit einer Feile eine Bruchlinie in die Glasoberfläche geritzt hat. Diese Methode hat den Nachteil, daß beim Abbrechen des Ampullenhalses feine Glassplitter auftreten, die den Ampulleninhalt verschmutzen, und daß sich die Person, die die Ampulle öffnet, verletzen kann.

Es ist bereits vorgeschlagen worden (DE-C 867 291), an der zum Brechen der Ampulle bestimmten Stelle entlang der Brechlinie eine Masse, z. B. geschmolzenes Email, aufzutragen, deren thermischer Ausdehnungskoeffizient größer ist als der des Ampullenglases, wodurch beim Erkalten dieser Masse eine Zugspannung in dem Glas entsteht, die ein Zerbrechen an dieser Stelle begünstigt. Dieses Emailaufschmelzverfahren ist, wie leicht einzusehen ist, sehr arbeitsaufwendig und führt wegen der unterschiedlichen Wärmeausdehnung der Materialien zu Oberflächenrissen.

Gemäß einem anderen Verfahren (GB-A 762 857) wird am Ampullenhals eine Querkerbe durch Ritzen, Schleifen, Ätzen oder auf ähnliche Weise angebracht und das Glas an dieser Stelle geschwächt (Sollbruchstelle).

Da der Grad der Verletzung der Glasoberfläche nicht exakt bestimmt werden kann, hat dieses Verfahren den Nachteil, daß die Ampulle vorzeitig brechen kann.

Es ist auch bereits vorgeschlagen worden, durch Erhitzen und Abkühlen des Gefäßes an der Bruchstelle Spannungen einzufrieren und das Gefäß dadurch zu öffnen, daß an dieser Stelle mittels eines geeigneten Werkzeugs das Glas verletzt wird. So beschreiben die DE-C 554 146, die DE-C 595 725 und die DE-C 683 259 ein Verfahren, bei dem während der Formgebung des Gefäßes ein kaltes Werkzeug mit dem noch plastischen Glas an der vorgesehenen Bruchstelle in Berührung gebracht wird, wodurch Spannungen in einer bestimmten Zone der Glaswandung erzeugt werden. Eine Berührung der Ampulleninnenwand mit einem Kühlwerkzeug zur Spannungserzeugung ist selbst bei heutigen Fertigungsmethoden überhaupt nicht zu verwirklichen. Durch oberflächliches Anritzen an einer Stelle dieser Spannungszone kann das Gefäß geöffnet werden. Die Patentansprüche 1 und 2 sind diesem Stand der Technik gegenüber abgegrenzt.

Genauer gesagt, bildet sich bei dem in den drei genannten Patentschriften beschriebenen Verfahren ein um den Umfang des Glasgefäßes, beispielsweise einer Ampulle umlaufender Spannungsring aus, der sich aus abwechselnden Zugspannungsstellen und Druckspannungsstellen zusammensetzt.

Dieses Verahren hat den Nachteil, daß beim Inberührungbringen des noch plastischen Glases mit dem kalten Werkzeug Oberflächendefekte, wie Mikrorisse, Schweißpunkte, Ausbrüche oder ähnliche Defekte auftreten, so daß ein oberflächenverletztes Glasgefäß entsteht, welches vorzeitig brechen kann. Außerdem ist dieses in den drei genannten Patenten beschriebene Verfahren aus folgenden Gründen problematisch: Damit sich bei späteren oberflächlichen Anritzen ein um den ganzen Umfang der Ampulle umlaufender Riß bilden kann, müssen die alternierenden Druck- und Zugspannungen hoch genug und darf der Abstand zwischen zwei Spannungsstellen nicht so groß sein, daß der Riß zum Stillstand kommt. Diese Bedingungen sind so schwierig einzuhalten, daß sich dieses Verfahren, obwohl es bestechend aussieht, niemals hat durchsetzen können, seitdem es vor über fünfzig Jahren vorgeschlagen wurde.

Ziel der vorliegenden Erfindung ist ein Glasgefäß, das derart vorbehandelt ist, daß es eine Sollbruchstelle in Form von thermisch erzeugten Vorspannungen hat, wobei diese Vorspannungen ein solches Spannungsprofil haben sollen, daß bei einem späteren oberflächlichen Verletzen der Glasoberfläche an einer bestimmten Stelle das Glasgefäß sich mit Sicherheit selbsttätig öffnet. Ein weiteres Ziel der Erfindung ist ein Verfahren zum Behandeln eines solchen Glasgefäßes, um derartige Vorspannungen in dem Glas zu erzeugen, wobei Oberflächenverletzungen vermieden werden sollen.

Diese Ziele werden mit einem Glasgefäß gemäß Patentanspruch 1 und mit einem Verfahren gemäß Patentanspruch 3 erreicht.

Das erfindungsgemäß präparierte Glasgefäß ist somit dadurch gekennzeichnet, daß es eine ringförmige Vorspannungszone aufweist, die aus einem zunächst erzeugten Zugspannungsring besteht, dem an einer Stelle eine punktförmige Druckspannungszone überlagert ist. An einer Stelle dieses komplexen Vorspannungsringes, und zwar an der der später erzeugten punktförmigen Druckspannungszone diametral gegenüberliegenden Stelle, befindet sich der Punkt maximaler Zugspannung.

Es wurde überraschend gefunden, daß dann, wenn man auf dem beschriebenen Vorspannungsring, vorzugsweise an dem vorstehend beschriebenen Punkt maximaler Zugspannung eine leichte Oberflächenverletzung erzeugt, beispielsweise durch schwaches Anritzen mittels eines geeigneten Werkzeugs, der erzeugte Riß linienförmig entlang der ringförmigen Verspannungszone läuft mit dem Ergebnis, daß das Glasgefäß in kurzer Zeit, die von Sekundenbruchteilen bis zu wenigen Sekunden reichen und durch die Höhe der Vorspannung gezielt eingestellt werden kann, entlang dieses Risses von selbst in zwei Teile getrennt wird.

Diese Stelle auf der ringförmigen Vorspannungszone, an der das Ritzwerkzeug angesetzt werden soll, ist zweckmäßigerweise durch eine geeignete Markierung, beispielsweise durch einen roten Strich, gekennzeichnet.

Das erfindungsgemäße Verfahren besteht darin, daß zunächst an dem Glasgefäß in einer Ebene, die senkrecht zur Achsrichtung des Gefäßes liegt, eine ringförmige erste Vorspannungszone erzeugt wird, die eine Zugspannungszone ist, und daß danach, wenn sich das Gefäß ausreichend abgekühlt hat oder abgekühlt worden ist, an einer Stelle dieser ringförmigen Zugspannungszone eine zweite, punktförmige Vorspannungszone erzeugt wird, die der ersten Vorspannungszone überlagert ist und gegenüber der ersten, der Zugspannungszone, eine Druckspannungszone darstellt.

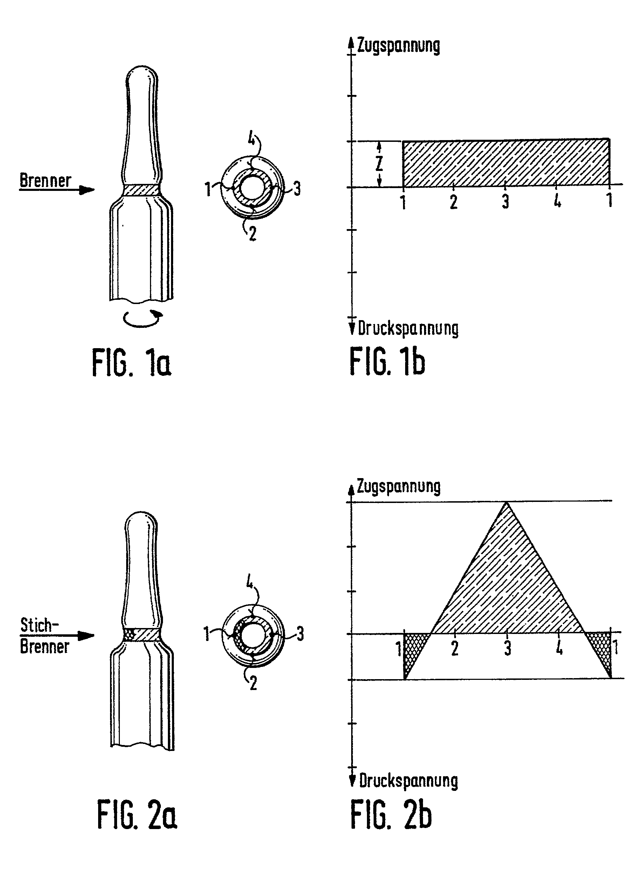

Es bildet sich somit ein Spannungsprofil aus, wie es in den Figuren 1a, 1b und 2a, 2b dargestellt ist: Durch das ringförmige Erhitzen des Glasgefäßes an seinem Umfang bildet sich ein Zugspannungsring aus (Fig. 1a), wobei die Vorspannung den Wert z hat (Fig. 1b).

Durch das punktförmige Erhitzen an einer Stelle des Zugspannungsringes (Fig. 2a) bildet sich das in Fig. 2b schematisch dargestellte Spannungsprofil aus.

Das Erhitzen des Glasgefäßes zur Erzeugung des Zugspannungsringes geschieht unter Relativbewegung des Gefäßes zu einer Heizquelle, die vorzugsweise eine Flamme ist. Danach läßt man das erhitzte Glasgefäß abkühlen, wobei man diese Abkühlung beschleunigen kann, beispielsweise mittels kalter Druckluft. Gemäß einer anderen Ausführungsform der Erfindung kann das insgesamt erhitzte Glasgefäß entlang der ringförmigen Zugspannungszone abgekühlt werden.

Auch das punktförmige Erhitzen auf dem Zugspannungsring zur Erzeugung der Druckspannungszone erfolgt vorzugsweise mittels einer Flamme, zweckmäßigerweise mittels eines Stichbrenners. Das Glas sollte dabei über seine Transformationstemperatur erhitzt werden.

Die geschilderte Behandlung des Glasgefäßes ist nicht an einen bestimmten Zeitpunkt während der Fertigung des Gefäßes oder während seiner späteren Verarbeitung bzw. Verwendung gebunden. Die erfindungsgemäße Behandlung kann sich unmittelbar an die Fertigung des Gefäßes, beispielsweise der Ampulle anschließen oder kann vor dem Befüllen des Gefäßes vorgenommen werden.

Die Erfindung wird nachstehend anhand eines Ausführungsbeispiels näher erläutert:

Eine nach ihrer Fertigung entspannte (gekühlte) Glasampulle wird am Ampullenhals erhitzt, indem die um ihre Längsachse rotierende Ampulle über einen stationär angeordneten Brenner geführt wird. Das Glas erhitzt sich dabei entlang dieser ringförmigen Zone auf etwa 700°C. Dabei bildet sich eine ringförmige Zugspannungszone auf dem Umfang des Ampullenhalses aus.

Statt eine um ihre Längsachse rotierende Ampulle an einer stationären Heizquelle vorbeizuführen, kann natürlich auch eine rotierende Heizquelle um eine stationär angeordnete Ampulle geführt werden.

Nun wird eine Stelle dieses Zugspannungsringes mittels eines Stichbrenners punktuell auf etwa 800°C erhitzt, wodurch eine zusätzliche, eng begrenzte Vorspannungszone erzeugt wird; an dieser Stelle überlagern sich also zwei Vorspannungen.

Die Stelle, an der zum Zwecke des späteren Öffnens des Glasgefäßes ein Ritzwerkzeug angesetzt werden soll, wird mittels eines in geeigneter Weise an dem Gefäß aufgebrachten, dünnen roten Farbstreifens markiert; dies ist die Stelle des Ampullenhalses, die der Stelle etwa diametral gegenüberliegt, an welcher die Ampulle punktuell erhitzt worden war.

Auch kann es zweckmäßig sein, auf die Zone der sich überlagernden Vorspannungen und auf die benachbarten Zonen eine Beschichtung aufzubringen, die aus einem bekannten Beschichtungsmaterial, wie z.B. Kunststoff oder Gleitmittel bestehen kann, und die den unverletzten Zustand der Glasoberfläche konserviert.

Wird nun die Oberfläche der Ampulle an der markierten Stelle leicht geritzt, bildet sich ein Mikroriß, und nach 1 bis 2 Sekunden springt die Ampullenspitze von selbst ab.

Das Ritzwerkzeug ist zweckmäßigerweise ein preiswertes Wegwerfwerkzeug; beispielsweise ein Blechstreifen oder ein Streifen aus Preßkarton, der an einer Kante mit Siliziumkarbid beschichtet ist, oder eine Hartmetallfeile. Auch kann der Verpackungskarton für die erfindungsgemäßen Glasgefäße so beschaffen sein, daß eine seiner Kanten als Ritzwerkzeug präpariert ist.

Gegebenenfalls kann das Ritzwerkzeug auch so gestaltet sein, daß, gleichzeitig mit dem Ritzvorgang, entstehende Glaspartikel außen abgewischt werden.

Mit der Korngröße des Ritzwerkzeuges kann die Öffnungszeit, vom Anriß bis zum Absprengen der Ampullenkuppe, beeinflußt werden.

Die erfindungsgemäßen Glasgefäße weisen zahlreiche Vorzüge und Vorteile gegenüber allen bisher bekannten, durch Brechen zu öffnenden Glasgefäßen auf:

- Das Öffnen geschieht, ohne daß der Bruchvorgang von Hand durchgeführt werden muß;
- es entstehen keine Glassplitter an der Innenoberfläche, die mit dem Inhalt in Berührung kommen können,
- das Glasgefäß besitzt bis zum gewollten Öffnen eine unverletzte Oberfläche, so daß keine Transportschäden zu befürchten sind;
- das Glasgefäß kann zu dem Zeitpunkt, da seine Spitze sich selbsttätig absprengt, ruhig gehalten werden, so daß eine in dem Gefäß gegebenenfalls enthaltende Flüssigkeit nicht in Bewegung geraten, beispielsweise nicht überschwappen kann;
- die Vorbehandlung des Glasgefäßes ist einfach und wenig arbeitsaufwendig und kann mittels Apparaturen durchgeführt werden, wie sie in den Produktionsstätten für die Glasgefäße ohnehin vorhanden sind,
- der beim Verschließen der Ampulle im Inneren entstehende Unterdruck wird beim Öffnungsvorgang durch den Mikroriß erst ausgeglichen, bevor der Ampullenhals abspringt. Dadurch wird ebenfalls ein Überschwappen des Ampulleninhaltes über die Trennstelle vermieden.

## Patentansprüche

1. Glasgefäß, insbesondere Ampulle, mit einer an einer bestimmten Stelle des Gefäßes erzeugten Vorspannung, die ein Öffnen des Gefäßes an dieser Stelle nach Anritzen mittels eines geeigneten Werkzeuges gestattet, dadurch gekennzeichnet, daß diese Vorspannung ohne Berührung durch ein Werkzeug ausschließlich durch thermische Behandlung des Gefäßes erzeugt worden ist und daß sie ein Spannungsprofil aufweist, bei welchem ein zunächst erzeugter, um den Umfang des Glasgefäßes laufender Zugspannungsring an einer Stelle (1) durch eine später erzeugte, punktförmige Druckspannungszone überlagert ist.

2. Glasgefäß nach Anspruch 1, dadurch gekennzeichnet, daß es an einer Stelle (3), die dieser punktförmigen Druckspannungszone etwa diametral gegenüberliegt, eine Markierung für das Ansetzen eines Ritzwerkzeuges aufweist.

3. Verfahren zur Herstellung eines Glasgefäßes, insbesondere einer Ampulle, bei dem in diesem Gefäß eine Vorspannung induziert wird, die ein späteres Öffnen des Gefäßes nach oberflächlichem Anritzen der Glasoberfläche ermöglicht, dadurch gekennzeichnet, daß diese Vorspannung ohne Berührung durch ein Werkzeug allein durch thermische Behandlung des Gefäßes erzeugt wird und daß diese thermische Behandlung derart durchgeführt wird, daß zunächst eine auf dem Umfang des Gefäßes umlaufende, ringförmige Zugspannung erzeugt wird und danach an einer Stelle (1) auf diesem Zugspannungsring eine diese Zugspannung überlagernde, punktförmige Druckspannung erzeugt wird.

4. Verfahren nach Anspruch 3, dadurch gekennzeichnet, daß diese ringförmige Zugspannung mittels Erhitzen des Gefäßes unter Relativbewegung des Gefäßes zur Heizquelle erzeugt wird.

5. Verfahren nach Anspruch 3, dadurch gekennzeichnet, daß diese ringförmige Zugspannung mittels Abkühlen des erhitzten Gefäßes unter Relativbewegung des Gefäßes zur Kühlquelle erzeugt wird.

6. Verfahren nach Anspruch 4, dadurch gekennzeichnet, daß diese ringförmige Zugspannungszone nach dem Erhitzen aktiv gekühlt wird.

7. Verfahren nach Anspruch 4, dadurch gekennzeichnet, daß dieses Erhitzen des Gefäßes mittels einer Flamme erfolgt.

8. Verfahren nach einem der Ansprüche 3 bis 7, dadurch gekennzeichnet, daß diese punktförmige Druckspannung durch punktförmiges Erhitzen des Glasgefäßes an einer Stelle (1) auf diesem Zugspannungsring erzeugt wird.

9. Verfahren nach Anspruch 8, dadurch gekennzeichnet, daß diese punktförmige Vorspannung mittels eines Stichbrenners erzeugt wird.

## Claims

1. Glass vessel, especially an ampoule, having a pretension generated at a specific site, said pretension allowing the opening of this vessel at this site after scratching by means of a suitable tool, characterized in that said pretension has exclusively been generated by thermal treating of the vessel without having been touched by a tool and that it shows a tension profile at which a tensile strain ring being generated first and going around the periphery of the glass vessel is superimposed at one site (1) by a punctuate compressive strain zone being generated later.

2. Glass vessel according to claim 1, characterized in that it shows a marking for applying a scratching tool at one site (3) lying about diametrically opposite this punctuate compressive strain zone.

3. Method for manufacturing a glass vessel, especially an ampoule, whereat a pretension is induced in this vessel, allowing to open the vessel later on after having superficially scratched the glass surface, characterized in that said pretension is generated only by thermal treatment of the vessel without having been touched by a tool and that said thermal treatment is performed in such a manner that first an annular tensile strain is generated going around the periphery of the vessel and then a punctuate compressive strain being superimposed to said tensile strain is generated at one site (1) on said tensile strain ring.

4. Method according to claim 3, characterized in that said annular tensile strain is generated by heating the vessel while moving the vessel relatively to the heating source.

5. Method according to claim 3, characterized in that said annular tensile strain is generated by cooling the vessel while moving the vessel relatively to the cooling source.

6. Method according to claim 4, characterized in that said annular tensile strain zone is actively cooled after having been heated.

7. Method according to claim 4, characterized in that said heating of the vessel is performed by means of a flame.

8. Method according to one of the claims 2 through 7, characterized in that said punctuate compressive strain is generated by punctuate heating of the vessel at one site (1) of said compressive strain ring.

9. Method according to claim 8, characterized in that said punctuate pretension is generated by means of a jet burner.

## Revendications

1. Récipient en verre, notamment empoule, d'une précontrainte engendrée à un endroit déterminé du récipient, permettant le débouchage du récipient à cet endroit après être entaillé au moyen d'un outil approprié, caractérisé en ce que cette précontrainte a été engendrée par traitement thermique du récipient sans contact par un outil et qu'elle montre un profil de contrainte auquel est superposé un rond de contrainte tractive engendré en premier lieu et contournant le périmètre du récipient à un endroit (1) par une zone de contrainte compressive ponctuelle et engendrée plus tard.

2. Récipient suivant la revendication 1, caractérisé en ce qu'il montre un marquage pour appliquer un outil de rayement à un endroit (3), qui est situé en face de ladite zone de contrainte compressive à peu près diamétralement.

3. Procédé de fabrication d'un récipient en verre notamment empoule, à quoi est induite dans ce récipient une précontrainte permettant un débouchage postérieur du récipient après avoir entaillé superficiellement la surface du verre, caractérisé en ce que ladite précontrainte est engendrée sans être touchée par un outil seulement par traitement thermique du récipient et que ce traitement thermique est exécuté de telle manière que l'on engendre en premier lieu une contrainte tractive annulaire contournant le périmètre du récipient et puis à un endroit (1) sur ce rond de contrainte tractive une contrainte compressive ponctuelle superposant cette contrainte tractive.

4. Procédé suivant la revendication 3, caractérisé en ce que ladite contrainte tractive annulaire est engendrée au moyen d'un echauffement du récipient sous le mouvement de récipient relative à la source de chauffage.

5. Procédé suivant la revendication 3, caractérisé en ce ladite contrainte tractive annulaire est engendrée au moyen d'un refroidissement du récipient sous le mouvement de récipient relative à la source de refroidissement.

6. Procédé suivant la revendication 4, caractérisé en ce que ladite zone de contrainte tractive est refroidie activement après l'échauffement.

7. Procédé suivant la revendication 4, caractérisé en ce que ledit échauffement du récipient se produit au moyen d'une flamme.

8. Procédé suivant une des revendications 2 à 7, caractérisé en ce que ladite contrainte compressive ponctuelle et engendrée par un échauffement ponctuelle de récipient à un endroit (1) sur ce rond de contrainte tractive.

9. Procédé suivant la revendication 8. caractérisé en ce que ladite précontrainte ponctuelle est engendrée au moyen d'un jet de brûleur.

FIG. 1a

FIG. 1b

FIG. 2a

FIG. 2b